# EUROPÄISCHE PATENTSCHRIFT

(11) **EP 3 120 970 B1**
(45) Veröffentlichungstag und Bekanntmachung des Hinweises auf die Patenterteilung: **24.01.2018**
(21) Anmeldenummer: 16179398.9
(22) Anmeldetag: 14.07.2016
(51) Int. Cl.: B23P 21/00, B23P 19/00

(54) **FERTIGUNGSEINRICHTUNG**
PRODUCTION DEVICE
DISPOSITIF DE FABRICATION

(30) Priorität: 22.07.2015 DE 202015103857 U
(43) Veröffentlichungstag der Anmeldung: 25.01.2017
(73) Patentinhaber: KUKA Systems GmbH, 86165 Augsburg (DE)
(72) Erfinder: NEIDER, Reinhold, 86462 Langweid (DE)
(74) Vertreter: Ernicke, Klaus Stefan

(56) Entgegenhaltungen:
- EP-A2- 2 781 298
- DE-U1-202007 016 549
- DE-U1-202012 102 405
- DE-U1-202013 102 852
- JP-A- H02 237 728
- JP-A- H02 243 234
- JP-A- 2010 030 010
- US-B1- 6 591 488

## Beschreibung

Die Erfindung betrifft einen Werkstückträger nach dem Oberbegriff des Anspruchs 1. Ein solcher Werkstückträger ist aus der JP H02 237728 A und DE 20 2013 102852 U1 bekannt. Aus der Praxis ist es bei einer Aufrüstlinie für Fahrzeugteile bekannt, die entlang einer Transportlinie bewegten Werkstückträger mit einer Hinterachse, einer Vorderachse und weiteren Fahrzeugteilen manuell zu beladen und auch mit den erforderlichen Schrauben zu bestücken. Diese sind an stationären und neben der Transportlinie angeordneten Vorratsbehälter angeordnet und werden von den Werkern dort bedarfsweise entnommen und den geladenen Fahrzeugteilen an den vorgesehenen Schraubstellen zugeführt.
Es ist Aufgabe der vorliegenden Erfindung, eine verbesserte Fertigungstechnik aufzuzeigen.
Die Erfindung löst diese Aufgabe mit den Merkmalen im Hauptanspruch.
Die beanspruchte Fertigungstechnik, d.h. der Werkstückträger, die Fertigungseinrichtung und das Fertigungsverfahren, haben verschiedene Vorteile.
Zum einen können die benötigten Schrauben und/oder andere Verbindungselemente in fertig bestückten Schraubennestern dem Werkstückträger zugeführt werden. Unter einem Schraubennest werden im Sinne der Erfindung auch Nester für andere Verbindungselemente verstanden.

Der Werkstückträger, weist eine oder mehrere Wechselaufnahmen für und mit Schraubennestern auf. Vorzugsweise können dies mit Schrauben und/oder anderen Verbindungselementen bestückte und vorkommissionierte Schraubennester sein.

Die Wechselaufnahmen und die Schraubennester können für einen automatischen Nestwechsel mittels programmierbarer Industrieroboter vorgesehen und ausgebildet sein. Die ein oder mehreren Wechselaufnahmen und Schraubennester sind derart auf einem Werkstückträger angeordnet und ausgerichtet, dass sie für einen Industrieroboter zugänglich und benutzbar sind. Eine Ausbildung der Wechselaufnahmen als robotertaugliche Rastaufnahmen ist besonders günstig. Für die Lösbarkeit und Wechselbarkeit können die Wechselaufnahmen beispielsweise aktive oder passive lösbare Rastaufnahmen aufweisen. Der oder die Industrieroboter können extern und/oder auf einem Werkstückträger angeordnet sein.

Die Schraubennester können über die Wechselaufnahmen lösbar und wechselbar auf dem Werkstückträger angeordnet werden. Dies geschieht bevorzugt an den für den weiteren Fertigungsablauf benötigten und besonders bevorzugt an den für Werker oder Montageroboter gut zugänglichen Stellen.

Eine oder mehrere Wechselaufnahmen können an einem oder beiden seitlichen Randbereichen und/oder im mittleren Bereich des Werkstückträgers angeordnet sein. Im mittleren Trägerbereich angeordnete Wechselaufnahmen können als Zwischenablage für einen Nestwechsel von der einen zur anderen Trägerseite vorgesehen und ausgebildet sein. Eine mittige Wechselaufnahme kann in einer Überschneidungszone der Arbeitsbereiche von beidseits des Werkstückträgers angeordneten Industrierobotern angeordnet sein.

Ein besonderer Vorteil ist die bereits erfolgte vollständige Bestückung der Schraubennester mit den jeweils benötigten Schrauben oder anderen Verbindungselementen. Diese Bereitstellung oder auch Bestückung kann extern an einer Rüststation erfolgen und kann auch vor der Übergabe an den Werkstückträger kontrolliert werden. Dies erhöht die Sicherheit für den Fertigungsprozess, was angesichts der Typenvielfalt von Fahrzeugen eine hohe Bedeutung hat.

Die bei der Fertigung und am Werkstückträger eingesetzten Werker können entlastet und ihre Wegstrecken verkürzt werden. Fehlbestückungen von Schraubennester und hieraus resultierende Fehlschraubungen sowie teurere Nacharbeiten können vermieden werden. Zudem wird Platz im Fertigungsbereich gespart, der angesichts der besagten Typenvielfalt für andere Zwecke sinnvoll genutzt werden kann.

Der Nestwechsel sowie die Zuführung und Abführung der Schraubennester an und zum Werkstückträger können vollautomatisch mittels programmierbarer Industrieroboter durchgeführt werden. Hierfür sind die Wechselaufnahmen am Werkstückträger sowie die Schraubennester adaptiert und robotertauglich ausgebildet.

Die Industrieroboter können auch eine bedarfsgerechte Verteilung der Schraubennester auf dem Werkstückträger durchführen. Für die späteren manuellen oder automatischen Schraubarbeiten ist es günstig, eine oder mehrere Wechselaufnahmen und dortige Schraubennester an einem oder beiden seitlichen Randbereichen des Werkstückträgers vorzusehen. Hier sind sie leicht zugänglich und schnell verfügbar. Ferner können eine oder mehrere Wechselaufnahmen im mittleren Bereich des Werkstückträgers angeordnet sein. Sie können als Zwischenablagen für einen Nestwechsel von der einen zur anderen Trägerseite dienen. Die Industrieroboter können auch Schraubennester direkt gegenseitig übergeben, z.B. mittels geeigneter Roboter- bzw. Greifwerkzeuge. Ein Roboter-Greifwerkzeug kann für ein oder mehrere Schraubennester ausgebildet sein.

Bei der beanspruchten Fertigungstechnik können Industrieroboter mit relativ geringer Reichweite eingesetzt werden. Industrieroboter können beidseits des Werkstückträgers und der Transportlinie angeordnet werden. Ein oder mehrere programmierbare Industrieroboter können zur automatischen Entnahme und Zuführung von leeren und bestückten Schraubennestern vorgesehen und ausgebildet sein. Die Arbeitsbereiche von Industrierobotern, insbesondere von besagten beidseits und gegenüber stehend angeordneten Industrierobotern, können einander am mittleren Bereich der Werkstückträger überschneiden. Die Nestübergabe kann hierbei zwischen den gegenüberstehenden Industrierobotern direkt oder über die Zwischenablage erfolgen.

Der oder die Industrieroboter können stationär oder längs der Transportlinie beweglich angeordnet sein. Ein Teil der programmierbaren Industrieroboter kann zwischen der Transportlinie und der Förderstrecke angeordnet sein.

Außerdem ist der Einsatz taktiler Industrieroboter günstig, die aufgrund ihrer kleinen Baugröße und niedrigen Tragkraft wenig Platz benötigen und die sich auch für eine Mensch-Roboter-Kooperation oder - Kollaboration (MRK) eignen und entsprechend ausgebildet sind. Zudem kann die Zuführung der fertig bestückten Schraubennester und die Rückführung der leeren Schraubennester durch eine einseitig an der Transportlinie angeordnete Fördereinrichtung erfolgen. Die Übergabe der Schraubennester von der einen zur anderen Trägerseite kann hierbei in der erwähnten Weise durch die kooperierenden Industrieroboter erfolgen.

Die externe Bestückung der Schraubennester kann vom Fertigungstakt und vom räumlich beengten Fertigungsbereich weitgehend oder komplett abgekoppelt und an unkritische Anlagenstellen verlagert oder extern ausgelagert werden. An einer hierfür vorgesehenen externen Rüststation können außerdem günstige Arbeitsbedingungen für körperlich behinderte Werker geschaffen werden.

Eine externe Rüststation kann eine Kontrolleinrichtung für die korrekte Bestückung der Schraubennester aufweisen. Die Fertigungseinrichtung kann eine Förderstrecke, insbesondere eine Palettenrutsche, für die Zu- und Rückführung von bestückten und leeren Schraubennestern zwischen einer externen Rüststation und einer Transportlinie für die Werkstückträger aufweisen. Die externe Rüststation und die Förderstrecke können einseitig oder beidseitig an der Transportlinie angeordnet sein.

Die bevorzugt taktilen Industrieroboter haben weitere prozesstechnische Vorteile. Sie können einerseits mit Werkern ohne Verletzungsgefahr und ohne Schutzzaun oder sonstige platzaufwändige Sicherungsmaßnahmen eingesetzt werden. Außerdem kann die automatische Zu- und Abführung von Schraubennestern an beliebig geeigneten Stellen entlang der Transportlinie erfolgen. Dies kann insbesondere auch in einer Messstation geschehen, in der mehr Platz zur Verfügung steht.

Der oder die taktilen Industrieroboter können eine zugeordnete, von außen einwirkende Belastungen aufnehmende Sensorik aufweisen. Vorzugsweise ist dies eine in den Industrieroboter integrierte Sensorik. Ein taktiler Industrieroboter kann eine oder mehrere kraftgesteuerte oder kraftgeregelte Roboterachsen aufweisen. Vorteilhafterweise hat ein taktiler Industrieroboter mindestens eine nachgiebige Roboterachse mit einer Nachgiebigkeitsregelung, insbesondere einer reinen Kraftregelung oder einer Kombination aus Positions- und Kraftregelung.

Die beanspruchte Ausbildung der Werkstückträger ist für die Fertigungstechnik von besonderem Vorteil. Insbesondere können die Werkstückträger und die Schraubennester jeweils mit Bezug auf einen bestimmten Fahrzeugtyp ausgerüstet sein. Dies ist für den bei der heutigen Fahrzeugfertigung gewünschten freien Typenmix von besonderem Vorteil. Ein Werkstückträger kann ein oder mehrere Werkzeuge, insbesondere Schraubspindeln, für eine manuelle Bedienung und/oder für einen programmierbaren, insbesondere taktilen, Industrieroboter mitführen.

Zudem können die vorkommissionierten Schraubennester unterschiedliche Schrauben, z.B. für Querverschraubungen und/oder Vertikalverschraubungen aufweisen. Die Vertikalschrauben können von einem Werker bereits beim Beladen des Werkzeugträgers an den Werkstücken, insbesondere Fahrzeugteilen, oder auch an trägerseitigen Werkzeugen, insbesondere Schraubspindeln, angebracht und vorgesteckt werden. Dies kann schnell, platzsparend und auf kurzen Wegen geschehen. Die Querschrauben können in einem späteren Fertigungsstadium von Werkern oder Schraubroboter aufgenommen und verschraubt werden.

In den Unteransprüchen sind weitere vorteilhafte Ausgestaltungen der Erfindung angegeben.

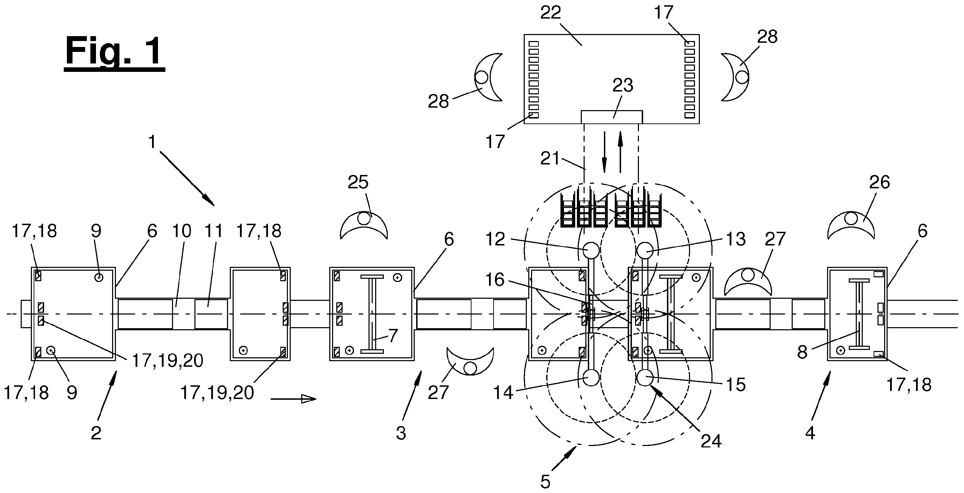

Die Erfindung ist in den Zeichnungen beispielhaft und schematisch dargestellt. Im Einzelnen zeigen:
- Figur 1:: eine ausschnittsweise schematische Darstellung einer Fertigungsanlage mit mehreren Stationen, einer Fertigungseinrichtung und mehreren Werkstückträgern mit Schraubennestern und
- Figur 2:: eine vergrößerte ausschnittsweise Darstellung eines Anlagenbereichs mit der Fertigungseinrichtung von Figur 1.
Die Erfindung betrifft einen Werkstückträger (6), eine Fertigungseinrichtung (5) und eine Fertigungsanlage (1). Figur 1 zeigt in einer ausschnittsweisen Darstellung eine Fertigungsanlage (1) mit mehreren Stationen (2,3,4) und einer die Stationen verbindenden Transportlinie (11), auf der mehrere Werkstückträger (6) in Reihe hintereinander mittels einer schematisch angedeuteten Transportvorrichtung (10), z.B. einem Rollenförderer, einem Hubshuttle oder dgl. taktweise oder kontinuierlich transportiert werden. Die Fertigungsanlage (1) weist ferner mindestens eine Fertigungseinrichtung (5) auf.
Die Werkstückträger (6) sind für ein oder mehrere Werkstücke (7,8) vorgesehen. In der gezeigten Ausführungsform werden mehrere Werkstücke (7,8) auf dem Werkstückträger aufgerüstet. Sie werden hierfür z.B. zueinander positioniert, ggf. gespannt und montiert bzw. gefügt, insbesondere verschraubt. Die Werkstücke (7,8) können auf dem Werkstückträger (6) mitgeführt und/oder von außerhalb im Verlauf des Aufrüstprozesses zugeführt werden. Das Aufrüsten kann in mehreren Schritten nacheinander und in verschiedenen Stationen (2,3,4) erfolgen. Die Fertigungsanlage (1) bildet dabei eine sogenannte Aufrüstlinie und die Fertigungseinrichtung (5) eine Aufrüsteinrichtung.

Die Werkstücke (7,8) können in beliebiger Art, Zahl, Ausbildung und Größe vorliegen. Vorzugsweise handelt es sich um Fahrzeugteile, insbesondere um Fahrwerksteile, von Landfahrzeugen, insbesondere Straßenfahrzeugen. Alternativ sind Werkstücke aus anderen Bereichen der Technik, insbesondere des Maschinenbaus oder Fahrzeugbaus, insbesondere auch Flugzeugbaus, möglich. Die Werkstücke (7,8) können z.B. Bestandteile einer Bodengruppe sein, die in der Fertigungsanlage (1) aufgerüstet und anschließend mit einer anderweitig hergestellten Karosserie verbunden (sog. Heirat) und verschraubt wird. In den gezeigten Ausführungsbeispielen sind Werkstücke (7,8) symbolisch und in Form einer Hinterachse (7) und einer Vorderachse (8) dargestellt. Daneben können weitere Werkstücke, wie Stoßdämpfer, Unterbodenbleche oder dergleichen vorhanden sein.

Die Werkstücke (7,8), insbesondere Fahrzeugteile, können typgebunden sein und entsprechend variieren, z.B. hinsichtlich Motorisierung, Achsgröße und Spurweite, Achsabstand und dgl..

Für die verschiedenen Typen von Werkstücken (7,8) werden unterschiedliche Verbindungselemente, insbesondere Schrauben, benötigt. Hierbei gibt es Querschrauben, die mit im Wesentlichen horizontaler Ausrichtung verschraubt werden und Vertikalschrauben für eine im Wesentlichen vertikale Verschraubung, z.B. für das Verschrauben der Unterbodengruppe mit der Karosserie oder der Federbeine bzw. Stoßdämpfer mit der Karosserie etc..

Die Werkstückträger (6) können einen z.B. rahmenartigen oder plattenartigen, einteiligen oder mehrteiligen Korpus und eine oder mehrere generische oder typspezifische Aufnahmen für die Werkstücke (7,8) aufweisen. Ferner können die Werkstückträger (6) ein oder mehrere mitgeführte Werkzeuge (9), z.B. Schraubspindeln, aufweisen. Die vorerwähnten Vertikalschrauben können an den Werkstücken (7,8) und/oder an den Werkzeugen (9) angeordnet, insbesondere aufgesteckt werden.

Die Werkstückträger (6) können gleich oder unterschiedlich ausgebildet sein. Vorzugsweise sind sie unterschiedlich und typbezogen ausgebildet und ausgerüstet.

Die einzelnen Werkstückträger (6) weisen jeweils eine oder mehrere Wechselaufnahmen (18,19) für Schraubennester (17) auf. Die Wechselaufnahmen (18,19) befinden sich an vorgegebenen und mit den Werkstücken (7,8) abgestimmten Stellen des Werkstückträgers (6). Sie erlauben die lösbare Aufnahme von jeweils mindestens einem Schraubennest (17) an einer definierten Position auf dem Werkstückträger (6). Die Werkstückträger (6) werden im Fertigungsprozess an den Wechselaufnahmen (18,19) mit ein oder mehreren Schraubennestern (17) versehen.

Die Schraubennester (17) beinhalten mehrere Schrauben für Verschraubungen im Fertigungsprozess, die manuell durch Werker oder automatisch durch Schraubroboter durchgeführt werden können. Die Schrauben können z.B. für Querverschraubungen und/oder Vertikalverschraubungen vorgesehen sein. Die Schraubennester (17) können mit Bezug auf einen bestimmten Fahrzeugtyp oder Werkstücktyp ausgerüstet und mit Schrauben bestückt sein. Desgleichen können die Werkstückträger (6) jeweils eine typbezogene Zahl und Anordnung von Wechselaufnahmen (18,19) aufweisen. Die Schrauben sind bevorzugt in einer definierten Position und Ausrichtung in einem Schraubennest aufgenommen.

Die Wechselaufnahmen (18,19) und die Schraubennester (17) sind für einen automatischen Nestwechsel durch einen oder mehrere programmierbare Industrieroboter (12-15) vorgesehen und ausgebildet. Der oder die Industrieroboter (12,15) können ein Schraubennest (17) vollautomatisch auf einer Wechselaufnahme (18,19) in der korrekten Position und Ausrichtung platzieren und hier auch wieder entnehmen.

Die Schraubennester (17) haben hierfür eine robotertaugliche Ausbildung. Sie sind z.B. als offene Behälter oder als Gestelle mit mehreren definierten Aufnahmestellen für die griffgerechte Aufnahme und Präsentation von Schrauben ausgebildet. Die Schraubennester (17) weisen definierte Angriffsstellen für ein Roboterwerkzeug (16), insbesondere einen Greifer, auf. Hierüber kann ein Industrieroboter (12-15) ein Schraubennest (17) exakt greifen, positionieren und abgeben.

Die Wechselaufnahmen (18,19) sind ebenfalls robotertauglich ausgebildet, z.B. als Rastaufnahmen für ein Schraubennest (17). Die Rastaufnahmen ermöglichen eine in Position und Ausrichtung definierte und reproduzierbare Anordnung der Schraubennester (17) auf dem Werkstückträger (6). Die Rastaufnahmen bewirken eine formschlüssige Aufnahme und Führung der Schraubennester (17), die zudem durch Kraft- oder Klemmschluss gesichert sein kann. Zum Aufsetzen und Entnehmen der Schraubennester (17) kann die Überwindung einer detektierbaren Kraftschwelle erforderlich sein. Der Wechselvorgang kann dadurch automatisiert und kontrolliert werden. Zudem kann die Nestlage beim Transport der werkstückträger (6) gesichert werden.

Für die konstruktive und funktionale Ausbildung der Rastaufnahmen gibt es verschiedene Möglichkeiten. Die Rastaufnahmen können Führungsmittel am Werkstückträger (6) aufweisen, die mit den ggf. einheitlichen Schraubennestern (17) zusammenwirken und die z.B. als Aufnahmewanne oder Führungsrahmen am Werkstückträger (6) ausgebildet sind. Ferner können Führungsmittel am Werkstückträger (6) und am Schraubennest vorhanden und z.B. als formschlüssig ineinander greifende Stifte und Aufnahmeöffnungen ausgebildet sein.

Ferner können Rastmittel am Werkstückträger (6) und/oder am Schraubennest (17) angeordnet sein und ggf. mit einem Führungsmittel zusammenwirken oder kombiniert sein. Die Rastmittel können z.B. als federnde Klemmbacken, Federnasen, Clipse, Federschellen oder dgl. ausgebildet sein.

Die Wechselaufnahmen (18,19) sind an geeigneten Stellen des Werkstückträgers (6), insbesondere an dessen Oberseite, angeordnet. Eine oder mehrere Wechselaufnahmen (18) sind an einem oder beiden seitlichen Randbereichen des Werkstückträgers (6) angeordnet. Sie sind für einen Werker oder einen Schraubroboter gut zugänglich. Die Positionsangabe "seitlich" bezieht sich auf die Transportlinie (11) bzw. auf die in den Zeichnungen durch einen Pfeil markierte Transportrichtung, in der die hintereinander aufgereihten Werkstückträger (6) durch die Stationen (2,3,4) bewegt werden.

Eine oder mehrere Wechselaufnahmen (19) sind im mittleren Bereich des Werkstückträgers (6) angeordnet. Die Wechselaufnahmen (18,19) erlauben einen Wechsel der Schraubennester und können für deren längerdauernde Aufnahme vorgesehen sein, zumindest für die Dauer des Fertigungsprozesses oder eines Prozessabschnitts.

Eine oder mehrere Wechselaufnahmen (19) im mittleren Bereich des Werkstückträgers (6) können als Zwischenablage (20) für einen Nestwechsel von der einen zur anderen Trägerseite vorgesehen und ausgebildet sein. Sie werden dabei nur temporär mit einem Schraubennest (17) belegt. Sie können ansonsten im Verlauf des Fertigungsprozesses oder eines Prozessabschnitts frei bleiben.

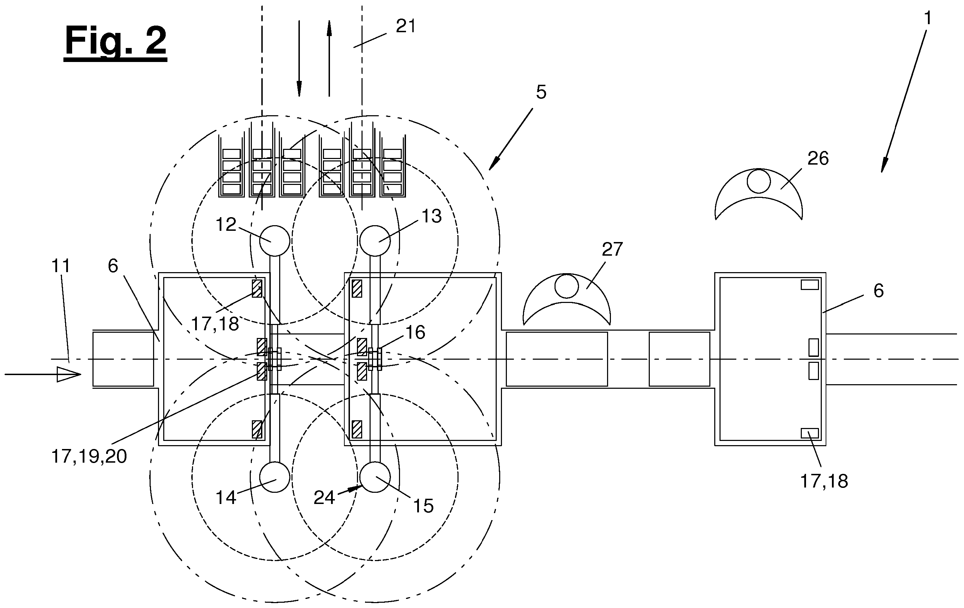

Wie Figur 1 und 2 verdeutlichen, sind an beiden Seiten des Werkstückträgers (6) und der Transportlinie (11) jeweils ein oder mehrere Industrieroboter (12-15) angeordnet und haben die angedeuteten Arbeitsbereiche. Die Arbeitsbereiche von an der Transportlinie (11) gegenüberstehenden Industrierobotern (12-15) überschneiden sich jeweils im mittleren Bereich der Werkstückträger (6). Die mittigen Wechselaufnahmen (19) der Werkstückträger (6) sind jeweils in einer solchen Überschneidungszone der Arbeitsbereiche angeordnet. Die Wechselaufnahmen (19) und die hier befindlichen Schraubennester (17) sind somit von beiden Seiten und von dortigen Industrierobotern (12-15) erreichbar.

Die Schraubennester (17) werden extern vorkommissioniert und mit Schrauben bestückt. Die Schraubbestückung kann typspezifisch sein. Diese vorkommissionierten Schraubennester (17) werden auf den Werkstückträgern (6) und den Wechselaufnahmen (18,19) vorzugsweise vollautomatisch und durch die Industrieroboter (12-15) positioniert.

Die Fertigungseinrichtung (5) weist einen oder mehrere der vorbeschriebenen Werkstückträger (6) für die ein oder mehreren darauf aufzurüstenden Werkstücke (7,8) auf. Die Fertigungseinrichtung (5) kann weitere Komponenten enthalten.

Dies kann z.B. die in Figur 1 dargestellte externe Rüststation (22) sein, die bestückte Schraubennester (17) bereit stellt. Die Rüststation (22) kann z.B. für die automatische oder manuelle Bestückung der Schraubennester (17) vorgesehen und ausgebildet ist. Hier können z.B. Werker (28) die Quer- und/oder Vertikalschrauben in bevorzugt typbezogener Zahl und Anordnung in die Schraubennester (17) einbringen, insbesondere einstecken. Die Schraubennester (17) können federnde Verliersicherungen für den Halt der Schrauben bis zum Prozesseinsatz aufweisen.

Die externe Rüststation (22) kann mit Abstand von der Transportlinie (11) im Bereich der Fertigungsanlage (1) angeordnet sein und befindet sich vorzugsweise nur an einer Seite der Transportlinie (11). Die gezeigte räumliche Nähe kann eine Zwischenpufferung der Schraubennester (17) entbehrlich machen. In einer anderen Variante kann die Bestückung der Schraubennester (17) an einem anderen und weiter entfernten Ort sowie ggf. außerhalb der Fertigungsanlage (1) erfolgen, wobei die Rüststation (22) als Zwischenpuffer oder Bevorratung sowie ggf. Kontrollstelle für die bestückten Schraubennester (17) ausgebildet ist.

Die Fertigungseinrichtung (5) kann ferner eine Förderstrecke (21) für die Zu- und Rückführung von bestückten und leeren Schraubennestern (17) zwischen der externen Rüststation (22) und der Transportlinie (11) für die Werkstückträger (6) aufweisen. Die Förderstrecke (21) kann z.B. als Schwerkraftförderer, insbesondere als Palettenrutsche gemäß der DE 20 2007 016 549 U1 oder der DE 20 2012 102 405 U1 ausgebildet sein. Sie kann gegensätzlich geneigte Zuführ- und Rückführbahnen für rollende oder gleitende und ggf. generatorisch gebremste Nestträger aufweisen. Das Be- und Entladen kann an den Enden dieser Bahnen an der Rüststation (22) und am Fertigungsbereich nahe der Industrieroboter (12-15) erfolgen. An der Rüststation (22) kann sich eine Kontrolleinrichtung (23) befinden, mit der die korrekte Bestückung der vollen Schraubennester (17) geprüft werden kann. Dies erfolgt vorzugsweise vor der Aufgabe an die Zuführung (21).

Die Zuführung (21) ist vorzugsweise nur an einer Seite der Transportlinie (11) angeordnet und endet im Bereich der dortigen Industrieroboter (12,13), die für ein automatisches Be- und Entladen der Zuführung (21) sorgen. An der Rüststation (22) kann das Be- und Entladen manuell oder ebenfalls automatisch erfolgen.

Die Fertigungseinrichtung (5) weist mehrere der erwähnten programmierbaren Industrieroboter (12 bis 15) auf. Die Industrieroboter (12 bis 15) sind beidseits der Transportlinie (11) und der Werkstückträger (6) angeordnet. Sie sind zur automatischen Entnahme und Zuführung von leeren und bestückten Schraubennestern (17) vorgesehen und ausgebildet. Die Entnahme und Zuführung erfolgt von und zum Werkstückträger (6). Hierbei ist nur ein Teil der programmierbaren Industrierobotern (12-15) zwischen der Transportlinie (11) und der Förderstrecke (21) angeordnet.

Die einzelnen Industrieroboter (12-15) weisen jeweils ein Roboterwerkzeug (16), insbesondere einen Greifer, für ein oder mehrere Schraubennester (17) auf. Der Greifer kann als Einzelgreifer oder als Mehrfachgreifer, insbesondere Doppelgreifer, ausgebildet sein.

Die Industrieroboter (12-15) sind in gegenseitiger Abstimmung derart gesteuert, dass für den Wechsel eines Schraubennests (17) von der einen zur anderen Trägerseite das besagte Schraubennest an einer Zwischenablage (20) übergeben wird. Beispielsweise setzt der eine Industrieroboter (12) ein von der Zuführung (21) übernommenes und mit Schrauben bestücktes bzw. volles Schraubennest (17) an der Zwischenablage (17) ab, wo es vom gegenüberliegenden Industrieroboter (14) aufgenommen und zur vorgesehenen Position an seiner Seite des Werkstückträgers (6) und der dortigen Wechselaufnahme (18,19) gebracht wird. Die einander bevorzugt paarweise an der Transportlinie (11) und am Werkstückträger (6) gegenüberstehenden Industrieroboter (12-15) kooperieren miteinander und verteilen einerseits in gegenseitiger Abstimmung die befüllten Schraubennester (17) auf dem Werkstückträger (6). Andererseits wirken sie auch in umgekehrter Richtung zusammen, um die einzelnen oder mehreren geleerten Schraubennester (17) zurückzuholen und an die Zuführung (21) zu übergeben.

In einer alternativen Ausführungsform kann ein Greifer (16) als Doppelgreifer ausgebildet sein, der zwei oder mehr leere und/oder befüllte Schraubennester (17) aufnehmen kann. Ferner kann eine direkte Übergabe von Schraubennestern zwischen den Industrierobotern (12-15) ohne Zwischenablage stattfinden. Hierfür ist der Doppelgreifer ebenfalls von Vorteil.

Die Industrieroboter (12-15) können stationär oder beweglich, insbesondere längs der Transportlinie (11) verfahrbar, angeordnet sein. Dies kann eine flurgebundene bzw. stehende Anordnung oder eine hängende Anordnung an einem Portal oder dgl. sein. Bei einer beweglichen Anordnung kann eine Fahrachse mit einem eigenen Antrieb vorhanden sein. Ferner ist es möglich, dass sich ein Industrieroboter (12-15) selbsttätig bewegt und in die Ausgangsposition zurückzieht oder zurückschiebt. Ein beweglicher Industrieroboter (12-15) kann auch mit dem bewegten Werkstückträger (6) oder der Transportvorrichtung (10) gekoppelt werden und seine Prozesstätigkeit während des Trägertransports "on-thefly" ausführen.

Der oder die Industrieroboter (12-15) weisen vorzugsweise mehrere über sog. Roboterachsen beweglich miteinander verbundene Roboterglieder auf. Sie können hierbei eine beliebige Zahl und Anordnung von rotatorischen und/oder translatorischen Roboterachsen haben. Die Achsen besitzen jeweils ein Lager für die Verbindung der Roboterglieder und einen von der Robotersteuerung (nicht dargestellt) steuerbaren oder regelbaren Achsantrieb.

Der oder die Industrieroboter (12-15) sind vorzugweise als taktile Roboter mit einer zugeordneten Sensorik (24) ausgebildet, welche von außen einwirkende Belastungen aufnehmen kann. Die in Figur 1 und 2 schematisch mit einem Pfeil angedeutete Sensorik (24) ist vorzugsweise in den jeweiligen Industrieroboter (12-15) integriert, wobei sich z.B. Momentensensoren und/oder Kraftsensoren an den Roboterachsen und deren Lagerungen befinden. Außerdem können hier Weggeber, insbesondere Drehgeber, angeordnet sein. Alternativ kann eine Belastungsaufnahme auch durch einen Stromsensor an einem bevorzugt elektromotorischen Roboterachsantrieb erfolgen. Der oder die Industrieroboter (12-15) können ferner eine steuerbare Bremse aufweisen.

Die Sensorik (24) verleiht dem oder den Industrierobotern (12-15) taktile Eigenschaften und sensitive Fähigkeiten. Diese können einerseits zum Suchen der Wechselaufnahmen (18,19) mit dem gegriffenen Schraubennest (17) eingesetzt werden. Andererseits kann eine Tast- und Suchfunktion auch bei der Aufnahme eines Schraubennests (17) und beim Be- und Entladen der Zuführung (21) eingesetzt werden.

Der Industrieroboter (12-15) kann eine oder mehrere kraftgeregelte oder kraft- und positionsgeregelte Roboterachsen bzw. Achsantriebe haben. Er kann ferner eine Nachgiebigkeitsregelung haben, die ihn bei Überschreiten einer Belastungsschwelle ausweichen oder federnd zurückweichen lässt. Die besagte Kraftsteuerung oder Kraftregelung der Roboterachsen bezieht sich auf die Wirkung nach außen am Abtriebsglied des Industrieroboters sowie auf die dort einwirkenden Reaktionskräfte. Roboterintern findet an den Roboterachsen oder Achsantrieben eine Momentensteuerung oder Momentenregelung statt.

Der taktile Industrieroboter (12-15) kann verschiedene Betriebsmodi mit unterschiedlichen Steifigkeiten bzw. Nachgiebigkeiten seiner Roboterachsen haben. Dies kann z.B. ein Handführmodus, ein Positionier- oder Suchmodus und ein Steifigkeitsmodus sein. Zwischen dem Betriebsmodi kann bedarfsweise umgeschaltet werden.

Der bevorzugt taktile Industrieroboter (12-15) ist für eine MRK vorgesehen und ausgebildet. Seine ein oder mehreren nachgiebigen Roboterachsen vermeiden Unfälle mit einem Werker (25-28) und Crashs mit Gegenständen im Arbeitsbereich durch Kraftbegrenzung und ggf. Stillstand oder federndes Ausweichen im Fall unvorhergesehener Kollisionen. Der taktile Industrieroboter (12-15) kann auf einen Berührungskontakt mit dem menschlichen Körper unter Vermeidung von Verletzungen reagieren.

Die in Figur 1 und 2 dargestellten Industrieroboter (12-15) können als Leichtbauroboter ausgebildet sein und aus leichtgewichtigen Materialien, z.B. Leichtmetallen und Kunststoff, bestehen. Sie haben auch eine kleine Baugröße und einen beschränkten Arbeitsbereich, der über mehr als die Hälfte, aber weniger als die gesamte Breite eines Werkstückträgers (6) reicht. Hierdurch ergeben sich die vorgenannten und in Figur 1 und 2 zwischen den gegenüberstehenden Roboterpaaren (12,14 und 13,15) gezeigten Überschneidungszonen der Arbeitsbereiche an der bevorzugt zentralen Transportlinie (11).

Im Fertigungsprozess der Fertigungsanlage (1) kann z.B. ein Werker (25) an der einen Station (3) eine Hinterachse (7) am einen Werkstückträger (6) auflegen und ggf. mit Vertikalschrauben aus einem Schraubennest (17) bestücken. Ein anderer Werker (26) an der Folge-Station (4) kann eine Vorderachse (8) an einem anderen Werkstückträger (6) auflegen und ggf. mit Vertikalschrauben aus einem Schraubennest (17) bestücken. Weitere Werker (27) können andere Werkstücke zuführen oder andere Rüstarbeiten an den Werkstückträgern (6) durchführen.

Eine Wechsel oder Tausch von vollen, vorkommissionierten und leeren Schraubennestern (17) kann an einer oder mehreren Stellen der Fertigungsanlage (1) und der Transportlinie (11) stattfinden. Ein solcher Wechsel- oder Tauschzyklus kann auf unterschiedliche Weise erfolgen. Bei der in Figur 2 vergrößert dargestellten Fertigungseinrichtung (5) entnimmt z.B. der Industrieroboter (12) ein leeres Schraubennest (17) von der einen mittleren Wechselaufnahme (19) und tauscht es an der Zuführung (21) gegen ein volles Schraubennest (17), das er dann an einer ggf. leeren Zwischenablage (20) in Trägermitte abstellt. Währenddessen entnimmt der gegenüber stehende Industrieroboter (14) ein leeres Schraubennest (17) von einer randnahen Wechselaufnahme (18) auf seiner Trägerseite und platziert es an der frei gewordenen mittleren Wechselaufnahme (19). Er kann im gleichen Zug ggf. das volle Schraubennest (17) von der Zwischenablage (20) entnehmen und an der besagten freien randnahen Wechselaufnahme (18) positionieren. Auf diese Weise können nach und nach die leeren und vollen Schraubennester (17) am Werkstückträger (6) getauscht werden, wobei weitere Roboterpaare (13,15) entsprechend funktionieren. Die an der Zuführung (21) befindlichen Industrieroboter (12,13) können außerdem die auf ihrer Trägerseite oder Trägerhälfte beindlichen leeren und vollen Schraubennester (17) wechseln bzw. tauschen.

Die gezeigte Fertigungseinrichtung (5) befindet sich am Übergang von zwei Stationen (3,4). Die z.B. zwei Roboterpaare (12,14 und 13,15) bedienen und bestücken verschiedene Werkstückträger (6) in den Stationen (3,4) gleichzeitig. In der Station (3) kann dabei der vordere Bereich des Werkstückträgers (6) und in der Station (4) der hintere Bereich des anderen Werkstückträgers (6) bedient und bestückt werden. Dies kann innerhalb eines Prozesstakts in der Fertigungsanlage (1) erfolgen. In zwei Takten kann ein Werkstückträger (6) komplett vorn und hinten mit vollen Schraubennestern (17) für die nächsten Fertigungs- bzw. Prozessschritte versehen werden. Es können bedarfsweise alle oder nur einige Schraubennestern (17) gewechselt werden.

Abwandlungen der gezeigten und beschriebenen Ausführungsformen sind in verschiedener Weise möglich. Insbesondere können die Merkmale der vorgenannten Ausführungsbeispiele und Abwandlungen beliebig miteinander kombiniert und ggf. vertauscht werden.

Die Zahl und Anordnung der Industrieroboter (12-15) kann variieren. Variabel ist auch die Ausbildung der Industrieroboter (12-15). Eine evtl. vorhandene Sensorik (24) kann in anderer Weise einem Industrieroboter (12-15) zugeordnet sein. Sie kann z.B. zwischen dem Roboter-Abtriebselement und einem Werkzeug, z.B. einem Greifwerkzeug, angeordnet sein. Variieren kann ferner die Zahl und Anordnung der Wechselaufnahmen (18,19) und der Schraubennester (17). Variabel ist auch die Ausbildung der Zuführung (21). Sie ist in der bevorzugten Ausführung als Schwerkraftförderer mit mehr als zwei Zuführ- und Rückführbahnen ausgebildet. Sie kann alternativ als angetriebener Bandförderer oder dergleichen gestaltet sein.

Die im bevorzugten und beanspruchten Ausführungsbeispiel genannten Schrauben sind eine besondere Form von Funktionsteilen. Desgleichen sind die Schraubennester eine besondere Form von Funktionsteilaufnahmen. Die Erfindung beinhaltet auch Funktionsteile und Funktionsteilaufnahmen allgemein. Die Funktionsteile können in anderer Ausführung, z.B. als andere Verbindungselemente und/oder Bauteile sowie Mischformen unterschiedlicher Arten von Funktionsteilen vorliegen. Ferner beinhaltet die Erfindung auch andere Arten von Funktionsteilaufnahmen, z.B. Bauteilaufnahmen oder Mischformen von Aufnahmen für verschiedene Arten von Funktionsteilen.

### BEZUGSZEICHENLISTE

- 1: Fertigungsanlage, Aufrüstlinie
- 2: Station
- 3: Station
- 4: Station
- 5: Fertigungseinrichtung, Aufrüsteinrichtung
- 6: Werkstückträger
- 7: Werkstück, Bauteil, Hinterachse
- 8: Werkstück, Bauteil, Vorderachse
- 9: Werkzeug, Schraubspindel
- 10: Transportvorrichtung
- 11: Transportlinie
- 12: Industrieroboter
- 13: Industrieroboter
- 14: Industrieroboter
- 15: Industrieroboter
- 16: Roboterwerkzeug, Greifer
- 17: Schraubennest
- 18: Wechselaufnahme, Rastaufnahme randseitig
- 19: Wechselaufnahme, Rastaufnahme mittig
- 20: Zwischenablage
- 21: Zuführung für Schraubennest, Palettenrutsche
- 22: Rüststation
- 23: Kontrolleinrichtung
- 24: Sensorik
- 25: Werker
- 26: Werker
- 27: Werker
- 28: Werker

## Patentansprüche

1. Werkstückträger mit Aufnahmen für ein oder mehrere aufzurüstende Werkstücke (7,8), insbesondere Fahrwerksteile, **dadurch gekennzeichnet, dass** der Werkstückträger (6) eine oder mehrere Wechselaufnahmen (18,19) für und mit Schraubennestern (17), insbesondere bestückten und vorkommissionierten Schraubennestern (17), aufweist, wobei die Wechselaufnahmen (18,19) und die Schraubennester (17) für einen automatischen Nestwechsel mittels programmierbarer Industrieroboter (12-15) vorgesehen und ausgebildet sind.

2. Werkstückträger nach Anspruch 1, **dadurch gekennzeichnet, dass** die Wechselaufnahmen (18,19) als robotertaugliche Rastaufnahmen ausgebildet sind.

3. Werkstückträger nach Anspruch 1 oder 2, **dadurch gekennzeichnet, dass** eine oder mehrere Wechselaufnahmen (18) an einem oder beiden seitlichen Randbereichen und/oder eine oder mehrere Wechselaufnahmen (19) im mittleren Bereich des Werkstückträgers (6) angeordnet sind.

4. Werkstückträger nach Anspruch 1, 2 oder 3, **dadurch gekennzeichnet, dass** eine der mehrere Wechselaufnahmen (19) im mittleren Bereich des Werkstückträgers (6) angeordnet und als Zwischenablage (20) für einen Nestwechsel von der einen zur anderen Trägerseite vorgesehen und ausgebildet sind.

5. Werkstückträger nach einem der vorhergehenden Ansprüche, **dadurch gekennzeichnet, dass** die mittigen Wechselaufnahmen (19) in einer Überschneidungszone der Arbeitsbereiche von beidseits des Werkstückträgers (6) angeordneten Industrierobotern (12-15) angeordnet ist.

6. Werkstückträger nach einem der vorhergehenden Ansprüche, **dadurch gekennzeichnet, dass** der Werkstückträger (6) ein oder mehrere mitgeführte Werkzeuge (9), insbesondere Schraubspindeln, aufweist.

7. Fertigungseinrichtung, insbesondere Aufrüsteinrichtung, mit Werkstückträgern (6) für mehrere darauf aufzurüstende Werkstücke (7,8), insbesondere Fahrzeugteile, **dadurch gekennzeichnet, dass** die Werkstückträger (6) nach mindestens einem der Ansprüche 1 bis 6 ausgebildet sind.

8. Fertigungseinrichtung nach Anspruch 7, **dadurch gekennzeichnet, dass** die Fertigungseinrichtung (5) eine externe Rüststation (22) für die Bereitstellung, insbesondere die manuelle oder automatische Bestückung der Schraubennester (17) aufweist.

9. Fertigungseinrichtung nach Anspruch 7 oder 8, **dadurch gekennzeichnet , dass** die Fertigungseinrichtung (5) eine Förderstrecke (21), insbesondere eine Palettenrutsche, für die Zu- und Rückführung von bestückten und leeren Schraubennestern (17) zwischen einer externen Rüststation (22) und einer Transportlinie (11) für die Werkstückträger (6) aufweist.

10. Fertigungseinrichtung nach einem der Ansprüche 7 bis 9, **dadurch gekennzeichnet, dass** die Fertigungseinrichtung (5) mehrere programmierbare Industrieroboter (12-15) aufweist, die beidseits der Transportlinie (11) und der Werkstückträger (6) angeordnet sind und die programmierbaren Industrieroboter (12-15) zur automatischen Entnahme und Zuführung von leeren und bestückten Schraubennestern (17) vorgesehen und ausgebildet sind.

11. Fertigungseinrichtung nach einem der Ansprüche 7 bis 10, **dadurch gekennzeichnet, dass** die beidseits der Transportlinie (11) angeordneten, bevorzugt mehrachsigen Industrieroboter (12-15) Arbeitsbereiche aufweisen, die einander am mittleren Bereich der Werkstückträger (6) überschneiden.

12. Fertigungseinrichtung nach einem der Ansprüche 7 bis 11, **dadurch gekennzeichnet, dass** die Industrieroboter (12-15) in gegenseitiger Abstimmung derart gesteuert sind, dass für den Wechsel eines Schraubennestes (17) von der einen zur anderen Trägerseite das Schraubennest (17) an einer Zwischenablage (20) oder direkt zwischen gegenüber stehenden Industrierobotern (12-15) übergeben wird.

13. Fertigungseinrichtung nach einem der Ansprüche 7 bis 12, **dadurch gekennzeichnet, dass** der oder die Industrieroboter (12-15) als taktile Roboter mit einer zugeordneten, von außen einwirkende Belastungen aufnehmenden Sensorik (24), bevorzugt einer in den Industrieroboter (12-15) integrierten Sensorik (24), ausgebildet sind.

14. Fertigungseinrichtung nach einem der Ansprüche 7 bis 13, **dadurch gekennzeichnet , dass** der Industrieroboter (12-15) eine oder mehrere kraftgesteuerte oder kraftgeregelte Roboterachsen aufweist.

15. Fertigungsanlage, insbesondere Aufrüstlinie, mit mehreren Stationen (2,3,4) entlang einer Transportlinie (11) und einer Transportvorrichtung (10) für Werkstückträger (6) für mehrere aufzurüstende Werkstücke (7,8), insbesondere Fahrwerksteile, **dadurch gekennzeichnet, dass** die Fertigungsanlage (1) eine Fertigungseinrichtung (5) aufweist, die nach mindestens einem der Ansprüche 7 bis 14 ausgebildet ist.

## Claims

1. Workpiece carrier having receptacles for one or more workpieces (7, 8) to be set up, in particular chassis parts, **characterized in that** the workpiece carrier (6) has one or more exchangeable receptacles (18, 19) for and with screw recesses (17), in particular equipped and pre-picked screw recesses (17), wherein the exchangeable receptacles (18, 19) and the screw recesses (17) are configured and provided for an automatic recess change by means of programmable industrial robots (12-15).

2. Workpiece carrier according to Claim 1, **characterized in that** the exchangeable receptacles (18, 19) are configured as robot-compatible latching receptacles.

3. Workpiece carrier according to Claim 1 or 2, **characterized in that** one or more exchangeable receptacles (18) are arranged in one or both lateral peripheral regions and/or one or more exchangeable receptacles (19) are arranged in the central region of the workpiece carrier (6).

4. Workpiece carrier according to Claim 1, 2 or 3, **characterized in that** one or more exchangeable receptacles (19) are arranged in the central region of the workpiece carrier (6) and are configured and provided as an intermediate repository (20) for a recess change from one carrier side to the other.

5. Workpiece carrier according to one of the preceding claims, **characterized in that** the central exchangeable receptacles (19) are arranged in an overlapping zone of the working regions of industrial robots (12-15) arranged on both sides of the workpiece carrier (6).

6. Workpiece carrier according to one of the preceding claims, **characterized in that** the workpiece carrier (6) has one or more entrained tools (9), in particular screw spindles.

7. Manufacturing device, in particular set-up device, having workpiece carriers (6) for a plurality of workpieces (7, 8) to be set up thereon, in particular vehicle parts, **characterized in that** the workpiece carrier (6) is configured according to at least one of Claims 1 to 6.

8. Manufacturing device according to Claim 7, **characterized in that** the manufacturing device (5) has an external set-up station (22) for providing, in particular manually or automatically equipping the screw recesses (17).

9. Manufacturing device according to Claim 7 or 8, **characterized in that** the manufacturing device (5) has a conveying section (21), in particular a pallet slide, for feeding and returning equipped and empty screw recesses (17) between an external set-up station (22) and a transport line (11) for the workpiece carriers (6).

10. Manufacturing device according to one of Claims 7 to 9, **characterized in that** the manufacturing device (5) has a plurality of programmable industrial robots (12-15) which are arranged on both sides of the transport line (11) and the workpiece carriers (6), and the programmable industrial robots (12-15) are configured and provided for automatically removing and feeding empty and equipped screw recesses (17).

11. Manufacturing device according to one of Claims 7 to 10, **characterized in that** the preferably multiaxial industrial robots (12-15) arranged on both sides of the transport line (11) have working regions which overlap one another in the central region of the workpiece carriers (6).

12. Manufacturing device according to one of Claims 7 to 11, **characterized in that** the industrial robots (12-15) are controlled in a manner coordinated with one another such that, in order to exchange a screw recess (17) from one carrier side to the other, the screw recess (17) is transferred at an intermediate repository (20) or directly between opposite industrial robots (12-15).

13. Manufacturing device according to one of Claims 7 to 12, **characterized in that** the industrial robot(s) (12-15) are configured as tactile robots having an associated sensor system (24) that picks up loads acting from the outside, preferably a sensor system (24) integrated in the industrial robot (12-15).

14. Manufacturing device according to one of Claims 7 to 13, **characterized in that** the industrial robot (12-15) has one or more force-controlled or force-regulated robot axes.

15. Manufacturing plant, in particular set-up line, having a plurality of stations (2, 3, 4) along a transport line (11), and a transport apparatus (10) for workpiece carriers (6) for a plurality of workpieces (7, 8) to be set up, in particular chassis parts, **characterized in that** the manufacturing plant (1) has a manufacturing device (5) which is configured according to at least one of Claims 7 to 14.

## Revendications

1. Support de pièces doté de logements pour une ou plusieurs pièces (7, 8) à équiper, en particulier des parties de train de roulement,
**caractérisé en ce que**
le support (6) de pièces présente un ou plusieurs logements échangeables (18, 19) pour des e (17) et présentant des poches à vis (17), en particulier garnies et préparées, les logements échangeables (18, 19) et les poches à vis (17) étant prévus et configurés pour un remplacement automatique des poches au moyen de robots industriels (12-15) programmables.

2. Support de pièces selon la revendication 1,
**caractérisé en ce que** les logements échangeables (18, 19) sont configurés comme logements encliquetables convenant pour robots.

3. Support de pièces selon les revendications 1 ou 2,
**caractérisé en ce qu'**un ou plusieurs logements échangeables (18) sont disposés sur une bordure latérale ou sur les deux bordures latérales et/ou **en ce que** un ou plusieurs logements échangeables (19) sont disposés dans la partie centrale du support (6) de pièces.

4. Support de pièces selon les revendications 1, 2 ou 3, **caractérisé en ce que** l'un des différents logements échangeables (19) est disposé dans la partie centrale du support (6) de pièces et est prévu et configuré comme support temporaire (20) pour un changement de poche d'un côté du support à l'autre.

5. Support de pièces selon l'une des revendications précédentes, **caractérisé en ce que** les logements échangeables centraux (19) sont disposés dans une zone de recouvrement des portées de travail de robots industriels (12-15) disposés des deux côtés du support (6) de pièce.

6. Support de pièces selon l'une des revendications précédentes, **caractérisé en ce que** le support (6) de pièces présente un ou plusieurs outils entraînés (9), en particulier des broches filetées.

7. Dispositif de fabrication, en particulier dispositif d'équipement, doté de supports (6) de pièces pour plusieurs pièces (7, 8) qui doivent y être placées, en particulier des parties de véhicule, **caractérisé en ce que** les supports (6) de pièce sont configurés selon au moins l'une des revendications 1 à 6.

8. Dispositif de fabrication selon la revendication 7, **caractérisé en ce que** le dispositif de fabrication (5) présente un poste externe d'équipement (22) pour préparer et en particulier équiper manuellement ou automatiquement les poches à vis (17).

9. Dispositif de fabrication selon les revendications 7 ou 8, **caractérisé en ce que** le dispositif de fabrication (5) présente un parcours de transport (21), en particulier une glissière à palettes, pour l'amenée et le recul de poches à vis (17) garnies ou vides entre un poste externe d'équipement (22) et une ligne de transport (11) des supports (6) de pièces.

10. Dispositif de fabrication selon l'une des revendications 7 à 9, **caractérisé en ce que** le dispositif de fabrication (5) présente plusieurs robots industriels (12-15) programmables disposés des deux côtés de la ligne de transport (11) et des supports (6) de pièces, les robots industriels programmables (12-15) étant prévus et configurés pour enlever et apporter automatiquement des poches à vis (17) vides ou garnies.

11. Dispositif de fabrication selon l'une des revendications 7 à 10, **caractérisé en ce que** les robots industriels (12-15), de préférence à plusieurs axes, disposés des deux côtés de la ligne de transport (11), se recouvrent mutuellement dans la partie centrale des supports (6) de pièces.

12. Dispositif de fabrication selon l'une des revendications 7 à 11, **caractérisé en ce que** les robots industriels (12-15) sont commandés de manière harmonisée de telle sorte que pour le remplacement d'une poche à vis (17) d'un côté à l'autre du support, la poche à vis (17) est transférée sur un support temporaire (20) ou directement entre des robots industriels (12-15) disposés face à face.

13. Dispositif de fabrication selon l'une des revendications 7 à 12, **caractérisé en ce que** le ou les robots industriels (12-15) sont configurés comme robots tactiles dotés d'un ensemble (24) de capteurs associé et reprenant des charges agissant de l'extérieur, de préférence d'un ensemble (24) de capteurs intégré dans les robots industriels (12-15).

14. Dispositif de fabrication selon l'une des revendications 7 à 13, **caractérisé en ce que** le robot industriel (12-15) présente un ou plusieurs axes de robot commandés mécaniquement ou régulés mécaniquement.

15. Installation de fabrication, en particulier ligne d'équipement, présentant plusieurs postes (2, 3, 4) disposés le long d'une ligne de transport (11) et un ensemble de transport (10) de supports (6) pour plusieurs pièces (7, 8) à placer, en particulier des parties de train de roulement, **caractérisée en ce que** l'installation de fabrication (1) présente un dispositif de fabrication (5) configuré selon au moins l'une des revendications 7 à 14.
